# EUROPÄISCHE PATENTSCHRIFT

(11) **EP 0 943 474 B1**
(45) Veröffentlichungstag und Bekanntmachung des Hinweises auf die Patenterteilung: **14.08.2002**
(21) Anmeldenummer: 98123701.9
(22) Anmeldetag: 12.12.1998
(51) Int. Cl.: B60J 7/14, B60J 7/16, B60J 7/20

(54) **Versenkbares Festdach für Cabrio-Fahrzeuge**
Retractable rigid roof for convertible vehicles
Toit rigide escamotable pour voiture cabriolet

(30) Priorität: 17.03.1998 DE 19811481
(43) Veröffentlichungstag der Anmeldung: 22.09.1999
(73) Patentinhaber: Edscha Cabrio-Dachsysteme GmbH, 94491 Hengersberg (DE)
(72) Erfinder: Kressel, Karl, 96215 Lichtenfels (DE); Huber, Helmut, 94557 Niederalteich (DE)
(74) Vertreter: Sparing, Rolf Klaus

(56) Entgegenhaltungen:
- DE-C- 4 100 240
- FR-A- 1 475 882
- V.HAAFTEN: "steel top disappears" AUTOMOTIVE INDUSTRIES, Bd. 108, Nr. 10, 15. Mai 1953 (1953-05-15), Seite 17 XP002116819 usa

## Beschreibung

Die Erfindung ein versenkbares Festdach nach dem Oberbegriff des Anspruchs 1.

Versenkbare Festdächer für Cabriofahrzeuge, bei denen eine starre Dachhaube aus einer den Fahrgastraum des Fahrzeuges übergreifenden Gebrauchslage heraus in einen hinter dem Fahrgastraum angeordneten Kofferraum absenkbar sind, sind an sich bekannt. Bei den meisten bekannten Bauarten derartiger versenkbarer Festdächer ist eine längsverschiebliche Abstützung der Dachhaube, wenigstens über ihre hinteren Dachpfosten auf innerhalb der Karosserie angeordneten Stützund Führungsschienen vorgesehen, was naturgemäß mit einem beträchtlichen Einbauaufwand und ferner auch einem entsprechenden Steuerungsaufwand versehen ist. Darüber hinaus haben die meisten bekannten Bauarten solcher in den Kofferraum versenkbarer Festdächer eine sehr wesentliche Beeinträchtigung der Nutzbarkeit des Kofferraumes jedenfalls bei in ihrer Verstaulage befindlicher Dachhaube zur Folge.
Bei einer abgewandelten Version versenkbarer Festdächer für Cabriofahrzeuge mit starrer Dachhaube liegt die starre Dachhaube in ihrer abgesenkten, den Fahrgastraum freigebenden Stellung auf dem Kofferraumdeckel auf. Allen derartigen Gestaltungsformen von versenkbaren Festdächern für Cabriofahrzeuge ist gemeinsam, daß selbst dann, wenn die Heckfensterscheibe in eine nach unten, in die Karosserie hinein versenkte Stellung verschwenkt werden kann, auf der einen Seite ein Betrieb des Fahrzeuges mit lediglich teilweise geöffnetem Dach weder vorgesehen noch möglich ist und daß ferner eine auf dem Kofferraumdeckel aufliegend abgelegte Dachhaube immer eine gewisse Problematik hinsichtlich ihrer klapperfreien Festlegung bei höheren Fahrgeschwindigkeiten mit sich bringt.
Es sind ferner auch bereits in den Kofferraum des Fahrzeuges absenkbare Festdächer bekannt, bei welchen zwecks Erzielung einer kompakten Ablagestellung der Dachhaube vorgesehen ist, daß die Heckfensterscheibe unter den hinteren Dachbereich der Dachhaube einklappbar und hierzu um eine im unteren Endbereich der hinteren Dachpfosten verlaufende Achse schwenkbar ist. Auch durch eine solche Maßnahme können die räumlichen Verhältnisse innerhalb des Kofferraumes nicht wesentlich verbessert werden.

Das gattungsbildende Dokument DE-C-41 00 240 beschreibt ein versenkbares einteiliges Festdach, das aus einer starren Dachschale besteht, an die sich hintere Dachpfosten einstückig anschließen, die eine Heckfensterscheibe seitlich einschließen. Die Heckfensterscheibe ist über Scharniergelenke mit dem mittleren Bereich der Dachschale und mit der Karosserie im vorderen Kofferraumbereich gelenkig verbunden. Ferner ist der hintere Bereich der Dachpfosten an jeweils eine Stützlenker angelenkt, dessen anderes Ende sich an der Karosserie gelenkig abstützt. Beim Öffnen des Festdachs wird dieses von dem Stützlenker einerseits und von dem wie ein Lenker wirkenden Heckfensterscheibe andererseits zunächst aufgerichtet und anschließend mit nach unten gerichteten Dachpfosten in den Kofferraum versenkt, wobei die gelenkige Verbindung der Heckfensterscheibe nicht aufgelöst wird, so daß in der offenen Verdeckstellung die Heckscheibe und die Dachschale im wesentlichen benachbart zueinander in einer im wesentlichen nach oben gerichteten Lage ausgefluchtet sind. Die beiden genannten Teile werden hierbei nicht in den Kofferraum verlagert, sondern in eine Position zwischen den Fahrzeugsitzen und einer vorderen Begrenzung des Kofferraums, so daß der vordere Anschluß der Dachschale derart mit einer Ausbuchtung versehen ist, um die Sicht nach hinten nicht zu behindern.

FR-A-1 475 882 beschreibt ein versenkbares Festdach, bei dem eine gesonderte Heckfensterscheibe nicht vorgesehen ist, welches über zwei ein Parallelogramm aufspannende Lenker in eine Ablagestellung in den Kofferraum verschwenkt wird, wozu ein Kofferraumdeckel an einer Heckpartie des Kofferraums entgegen der Fahrtrichtung geöffnet werden kann.

Es ist die Aufgabe der Erfindung, ein versenkbares Festdach nach dem Oberbegriff des Anspruchs 1 anzugeben, bei dem bei baulich einfacher Ausgestaltung der Festdachanbindung an die Fahrzeugkarosserie eine leichte Handhabbarkeit des versenkten Festdaches gewährleistet ist und ferner bei völlig abgesenktem Festdach noch ein ausreichender nutzbarer Innenraum des Kofferraums erhalten bleibt.

Diese Aufgabe wird bei dem eingangs genannten Festdach erfindungsgemäß mit den kennzeichnenden Merkmalen des Patentanspruchs 1 gelöst.

Das mit einem versenkbaren Festdach ausgestattete Cabrio-Fahrzeug ermöglicht darüber hinaus einen Fahrbetrieb mit lediglich teilweise geöffnetem Festdach.

Die erfindungsgemäße Anordnung resultiert aus dem Umstand, daß der Ausschnitt des vorderen Randbereiches des Kofferraumdeckels bzw. überhaupt der Kofferraumdeckel eine Ausschnittsform aufweist, welche es bei in seine Öffnungslage aufgeschwenktem Kofferraumdeckel ermöglicht, die starre Dachhaube unter dem in die Öffnungsstellung verschwenktem Kofferraumdeckel hindurch in den Kofferraum des Fahrzeuges zu verlagern. Damit kann die starre Dachhaube in einer einfachen Bewegung in den Kofferraum des Fahrzeuges verlagert werden, so daß zum einen neben einer höchst einfachen Handhabung auch eine einfache kostengünstige Gestaltung des Abstütz-bzw. Bewegungsmechanismusses für die Dachhaube ermöglicht ist und daß zum anderen zugleich eine raumsparende Unterbringung der Dachhaube innerhalb des Kofferraumes gewährleistet ist.

In einer besonders bevorzugten Verwirklichungsform eines versenkbaren Festdaches ist weiter vorgesehen, daß die Heckfensterscheibe von der Dachhaube unabhängig um eine im Bereich ihrer Unterkante verlaufende Achse in einer nach vorne gerichteten Schwenkbewegung in die Karosserie einklappbar ist. Daraus resultiert zum einen der Vorteil, daß die Heckfensterscheibe nicht zusammen mit der Dachhaube in den Kofferraum abgesenkt werden muß und daher auch bei in diesen abgesenkter Dachhaube der weitaus überwiegende Teil des Raumes des Kofferraumes durch den Heckfensterausschnitt der Dachhaube frei zugänglich bleibt.

Vorzugsweise ist vorgesehen, daß die Dachhaube und der Kofferraumdeckel zueinander gegensinnig schwenkbar an der Karosserie angelenkt sind, wobei zweckmäßigerweise weiter vorgesehen ist, daß auch die Heckfensterscheibe gleichsinnig zum Kofferraumdeckel schwenkbar an der Karosserie angelenkt ist.

In einer bevorzugten Ausführungsform kann vorgesehen sein, daß die starre Dachhaube samt den mit ihr baueinheitlich ausgebildeten hinteren Dachpfosten vermittels zweier Schwenkhebelpaare, deren karosserieseitige Anlenkungen in Fahrzeuglängsrichtung zueinander beabstandet sind, in einer Schwenk-Schiebebewegung in den Kofferraum des Fahrzeuges absenkbar an der Fahrzeugkarosserie angelenkt ist. Die zu beiden Seiten der Fahrzeuglängsmitte angeordneten Schwenkhebelpaare bilden dabei jeweils ein Gelenkparallelogramm, in der Weise, daß die Dachhaube im Verlauf ihrer Öffnungs-und Schließbewegung jeweils einer von einer reinen Kreisbahn abweichende Bewegungsbahn folgend verlagert wird. Dies ermöglicht vor allem auch einerseits eine einfache Ausbildung der stirnseitigen Verriegelung der Dachhaube am Windschutzscheibenrahmen und andererseits eine absolut stabile Abstützung des hinteren Bereiches der in ihrer Schließlage befindlichen Dachhaube.

In zweckmäßiger Weiterbildung der Schwenkabstützung der Dachhaube kann dann weiter vorgesehen sein, daß die vorderen der beiden jeweils ein Schwenkhebelpaar bildenden Schwenkhebel in deren Dachbereich an der Dachhaube angelenkt und abgewinkelt ausgebildet sind, derart, daß sie in ihrem oberen Bereich eine mittlere, im Wesentlichen in Verlängerung der 8-Säule der Karosserie ausgerichtet verlaufende Dachsäule bilden.
Eine mögliche weitere Ausgestaltung einer derartig ausgebildeten Schwenkabstützung der Dachhaube könnte weiter vorsehen, daß die vorderen der beiden ein Schwenkhebelpaar bildenden Schwenkhebel über einen die Karosseriebreite übergreifenden bügelförmigen Bereich untereinander verbunden sind und dieserart einen Überrollbügel bilden.

Hinsichtlich der Möglichkeit, das Fahrzeug auch mit lediglich teilweise geöffnetem Dach zu benutzen zu können, wird als besonders vorteilhaft angesehen, daß die Heckfensterscheibe um eine entlang ihrer Unterkante verlaufende Achse nach vorne schwenkbar an der Fahrzeugkarosserie angelenkt ist. Diese Maßnahme ermöglicht nicht nur ein Benutzen des Fahrzeuges mit lediglich teilweise geöffnetem Dach, sondern bringt darüber hinaus auch noch den Vorteil mit sich, daß die Heckfensterscheibe in ihrer Schließstellung von innen gegen die umgebenden Ränder der Dachhaube bzw. des Heckfensterausschnittes der Dachhaube anliegt, woraus unter Einsatz verhältnismäßig einfacher Dichtungsmittel eine sicher funktionierende Dichtwirkung erzielbar ist.

In weiterer zweckmäßiger Ausgestaltung ist ferner vorgesehen, die hinteren Seitenfensterbereiche des Fahrzeuges als Dreiecksfenster ausgebildet und mit der Heckfensterscheibe starr verbunden sind. Im Einzelnen kann hierbei vorgesehen sein, daß die Heckfensterscheibe in einem Rahmen aufgenommen ist, an welchen unter entsprechender Abwinkelung Teilrahmen oder dergl. für die Anbindung und Halterung der hinteren Dreiecksfenster der Fahrzeugkarosserie angeschlossen sind. Dies ermöglicht neben einer weitgehenden Freigabe des hinteren Bereiches des Fahrzeugdaches beim Betrieb des Fahrzeuges mit lediglich teilweise geöffnetem Dach auch eine besonders einfache und raumsparende Unterbringung der starren Dachhaube im Kofferraum. Zudem resultiert aus dieser Maßnahme naturgemäß auch der Vorteil der Wegfalles eines besonderen Antriebes für die Seitenfensterbereiche und zugleich einer optimal raumsparenden Unterbringung der Seitenfensterbereiche bei voll geöffnetem Fahrzeugdach.

Zweckmäßigerweise ist ferner vorgesehen, daß die Heckfensterscheibe samt der an sie angeschlossenen Seitenfensterbereiche an einer im Bereich ihres bei geschlossenem Dach untenliegenden Unterrandes angeordneten Karosserietraverse angelenkt ist. Diese Anlenkungsweise der Heckfensterscheibe gestattet zum einen die Verwendung verhältnismäßig einfacher Scharniere für die Heckfensterscheibenanlenkung und zum anderen ein Einliegen der abgeklappten Heckfensterscheibe in einer niedrigen Stellung, welche eine Überdeckung mit einer Abdekkung, beispielsweise einem Deckel oder einer Persenning oder dergl. ermöglicht.

In einer bevorzugten Weiterbildung des Merkmales einer Anlenkung der Heckfensterscheibe an einer Karosserietraverse kann zudem vorgesehen sein, daß die die Anlenkung der Heckfensterscheibe abstützende Karosserietraverse absenkbar gestaltet ist. Dies erweitert die Gestaltungsmöglichkeiten eines mit einem versenkbaren Festdach der hier vorausgehend dargestellten Bauart ausgestatteten Fahrzeuges dahingehend, daß die Dachhaube in ihrer abgesenkten Verstaulage mit ihrem vorderen Bereich die in der abgesenkten Stellung befindliche Heckfensterscheibe wenigstens teilweise übergreift.

Die Erfindung ist in der nachfolgenden Beispielsbeschreibung anhand eines in der Zeichnung dargestellten Ausführungsbeispieles im Einzelnen beschrieben.
- Fig. 1: zeigt eine schaubildliche Darstellung eines Cabrio-Fahrzeuges bei vollständig geschlossenem Festdach.
- Fig. 2: zeigt eine schaubildliche Darstellung eines Cabrio-Fahrzeuges bei in der Öffnungsstellung befindlicher Heckfensterscheibe.

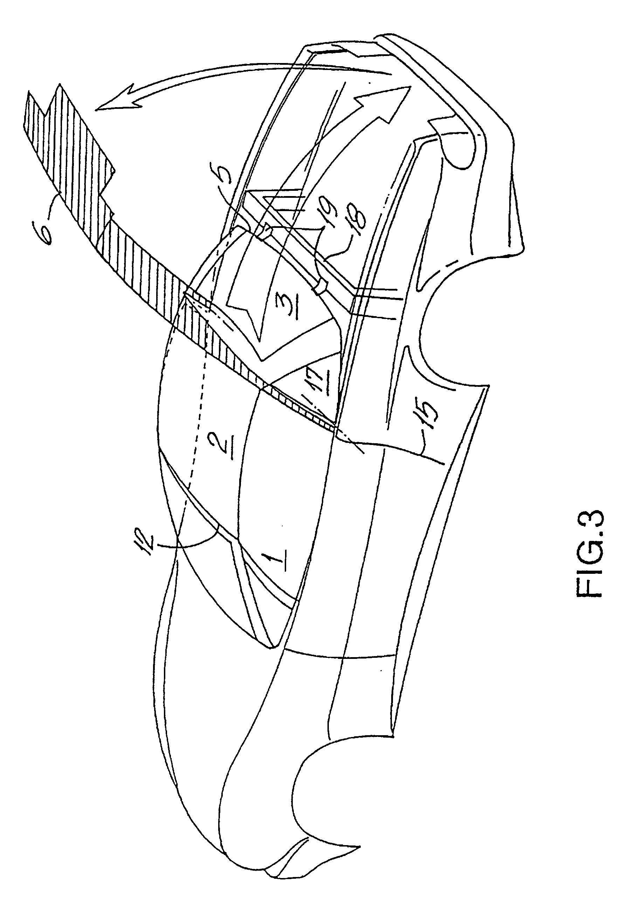

- Fig. 3: zeigt eine schaubildliche Darstellung eines Cabrio-Fahrzeuges bei vollständig geschlossenem Festdach und vollständig geöffnetem Kofferraumdeckel.
- Fig. 4: zeigt eine schaubildliche Darstellung eines Cabrio-Fahrzeuges bei vollständig geöffnetem Festdach.

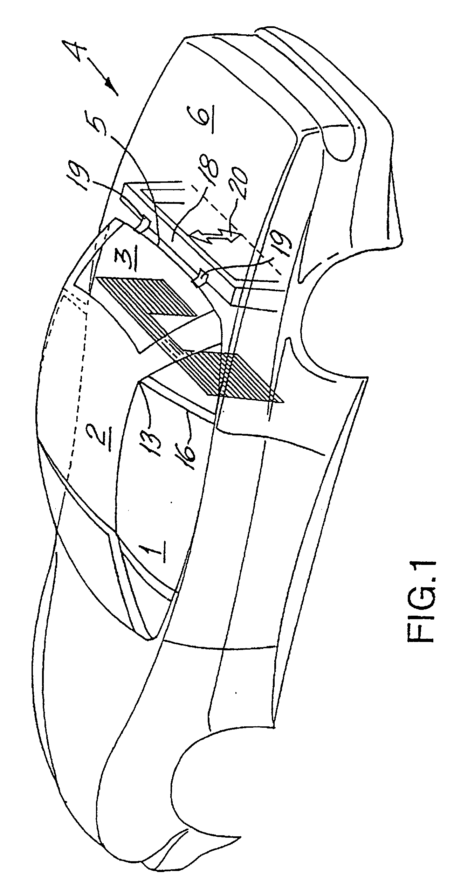

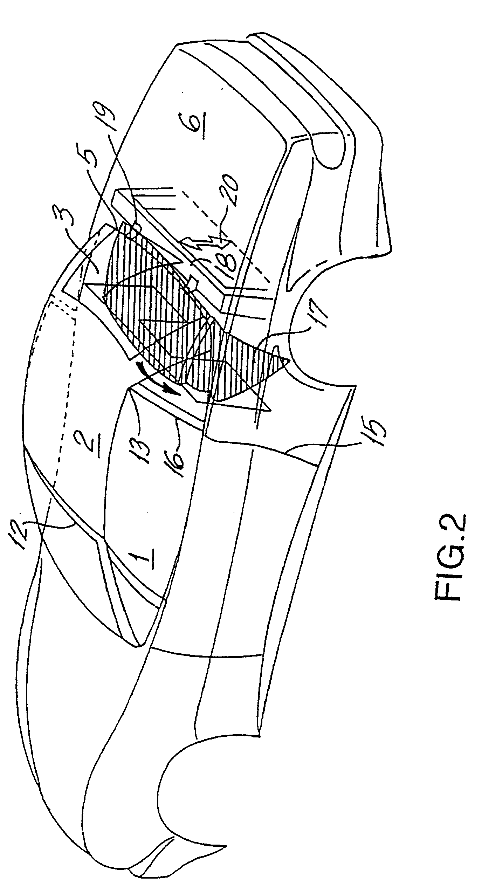

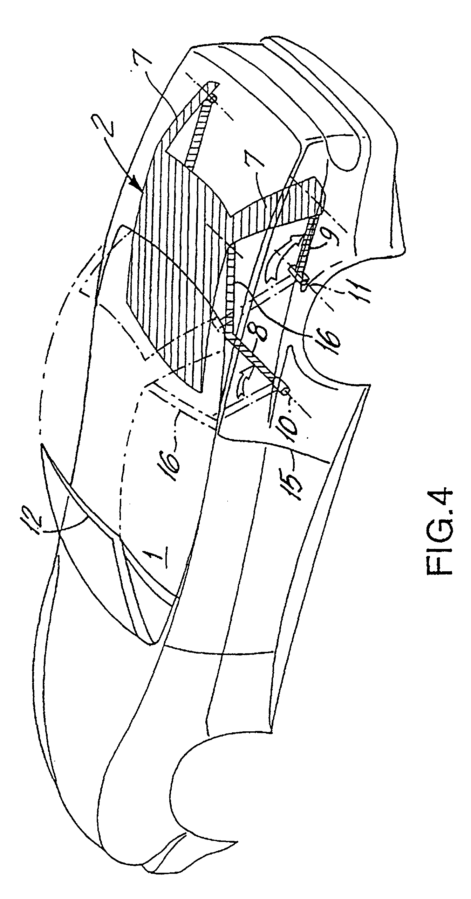

In der Zeichnung ist ein mit einem versenkbaren Festdach ausgestattetes Cabrio-Fahrzeug dargestellt, dessen Festdach im Wesentlichen aus einer den gesamten Fahrgastraum 1 übergreifenden starren Dachhaube 2 und einer von dieser unabhängig verstellbaren Heckfensterscheibe 3 besteht und dessen starre Dachhaube 2 insgesamt in den Kofferraum 4 des Fahrzeuges absenkbar ist. Die Heckfensterscheibe 3 ist von der Dachhaube 2 unabhängig um eine im Bereich ihrer Unterkante 5 verlaufende Achse in einer nach vorne gerichteten Schwenkbewegung in die Karosserie einklappbar. Die Dachhaube 2 und der Kofferraumdeckel 6 sind zueinander gegensinnig schwenkbar an der Karosserie angelenkt, wobei die starre Dachhaube 2 samt den mit ihr baueinheitlich ausgebildeten hinteren Dachpfosten 7 vermittels zweier Schwenkhebelpaare 8,9, deren karosserieseitige Anlenkungen 10, 11 in Fahrzeuglängsrichtung zueinander beabstandet sind, in einer Schwenk-Schiebebewegung in den Kofferraum 4 des Fahrzeuges absenkbar an der Fahrzeugkarosserie angelenkt ist. Die zu beiden Seiten der Fahrzeuglängsmitte angeordneten Schwenkhebelpaare 8, 9 bilden dabei jeweils ein Gelenkparallelogramm, in der Weise, daß die Dachhaube 2 , wie insbesondere aus der Darstellung der Figur 4 erkennbar, im Verlauf ihrer Öffnungs-und Schließbewegung jeweils einer von einer reinen Kreisbahn abweichende Bewegungsbahn folgend verlagert wird. Stirnseitig ist eine in der Zeichnung nicht im Einzelnen gezeigte Verriegelung der Dachhaube 2 am Windschutzscheibenrahmen 12 vorgesehen, während andererseits die Schwenkhebelpaare 8, 9 eine absolut stabile Abstützung des hinteren Bereiches der in ihrer Schließlage befindlichen Dachhaube 2 bilden. Die vorderen 8 der beiden jeweils ein Schwenkhebelpaar bildenden Schwenkhebel 8, 9 sind in deren Dachbereich 13 an der Dachhaube 2 angelenkt. Die Schwenkhebel 8 sind ferner abgewinkelt ausgebildet, derart, daß sie in ihrem oberen Bereich eine mittlere, in Verlängerung der B-Säule 15 der Karosserie ausgerichtet verlaufende Dachsäule 16 bilden. Die Heckfensterscheibe 3 liegt in ihrer Schließstellung von innen gegen die umgebenden Ränder der Dachhaube 2 bzw. des Heckfensterausschnittes der Dachhaube 2 an. Die hinteren Seitenfensterbereiche 17 des Fahrzeuges sind als Dreiecksfenster ausgebildet und mit der Heckfensterscheibe 3 starr verbunden. Die Heckfensterscheibe 3 ist samt der an sie angeschlossenen Seitenfensterbereiche 17 an einer im Bereich ihres bei geschlossenem Dach untenliegenden Unterrandes 5 angeordneten Karosserietraverse 18 angelenkt. Diese Anlenkungsweise der gestattet die Verwendung verhältnismäßig einfacher Scharniere 19 für die Heckscheibenanlenkung. Die die Heckfensterscheibe abstützende Karosserietraverse 18 kann, wie in der Figur 1 und 2 durch den Pfeil 20 angedeutet, absenkbar gestaltet sein.

## Patentansprüche

1. Versenkbares Festdach für Cabrio-Fahrzeuge mit einem Kofferraumdeckel (6), welches im Wesentlichen aus einer den gesamten Fahrgastraum (1) übergreifenden starren Dachhaube (2) mit baueinheitlich mit der Dachhaube (2) ausgebildeten hinteren Dachpfosten (7) und eine von dieser unabhängig verstellbare Heckfensterscheibe (3) besteht, wobei die Heckfensterscheibe (3) zwischen einer aufgerichteten, nach oben aus der Fahrzeugkarosseriekontur heraus verschwenkten in eine in die Fahrzeugkarosserie abgesenkten Stellung und die Dachhaube (2) zwischen einer den Fahrgastraum (1) überdeckenden Schließlage und einer nach hinten verfahrenen Öffnungsstellung bzw. Staustellung hin und herbewegbar sind,
**dadurch gekennzeichnet,**
**daß** der Kofferraumdeckel (6) den rückwärtigen Bereich der Dachhaube (2) umgreifend an oder wenigstens im Bereich der B-Säule an der Fahrzeugkarosserie angelenkt ist, und
**daß** der Abstand zwischen der Hinterseite der hinteren Dachpfosten (7) der Dachhaube (2) und der B-Säule der Fahrzeugkarosserie wenigstens der Höhe des Festdaches entspricht.

2. Festdach nach Anspruch 1, **dadurch gekennzeichnet, daß** die Heckfensterscheibe (3) von der Dachhaube (2) unabhängig um eine im Bereich ihrer Unterkante (5) verlaufende Achse in einer nach vorne gerichteten Schwenkbewegung in die Karosserie einklappbar ist.

3. Festdach nach Anspruch 1 oder 2, **dadurch gekennzeichnet, daß** die Dachhaube (2) und der Kofferraumdeckel (6) zueinander gegensinnig schwenkbar sind.

4. Festdach nach einem der Ansprüche 1 bis 3, **dadurch gekennzeichnet, daß** die Dachhaube (2) samt den mit ihr baueinheitlich ausgebildeten hinteren Dachpfosten (7) vermittels zweier Schwenkhebelpaare (8, 9), deren karosserieseitige Anlenkungen (10, 11) in Fahrzeuglängsrichtung zueinander beabstandet sind, in einer Schwenk-Schiebebewegung in den Kofferraum (4) des Fahrzeuges absenkbar ist.

5. Festdach nach Anspruch 4, **dadurch gekennzeichnet, daß** die vorderen (8) der beiden ein Schwenkhebelpaar bildenden Schwenkhebel (8, 9) abgewinkelt sind und in ihrem abgewinkelten oberen Bereich eine mittlere Dachsäule bilden.

6. Festdach nach Anspruch 4 oder 5, **dadurch gekennzeichnet, daß** die vorderen (8) der beiden ein Schwenkhebelpaar bildenden Schwenkhebel (8, 9) untereinander über einen die Karosseriebreite übergreifenden bügelförmigen Bereich verbunden sind und einen Überrollbügel bilden.

7. Festdach nach einem der Ansprüche 1 bis 6, **dadurch gekennzeichnet, daß** hintere Seitenfensterbereiche (17) als Dreiecksfenster ausgebildet und starr mit der Heckfensterscheibe (3) verbunden sind.

8. Festdach nach Anspruch 7, **dadurch gekennzeichnet, daß** die Dachhaube (2) und die mit den Seitenfensterbereichen (17) zu einer Einheit vereinigte Heckfensterscheibe (3) um zueinander parallele Achsen und gleichsinnig schwenkbar an die Fahrzeugkarosserie angeschlossen sind.

9. Festdach nach einem der Ansprüche 1 bis 8, **dadurch gekennzeichnet, daß** die Heckfensterscheibe (3) vermittels einfacher, in ihrem mittleren Bereich an ihre Unterkante (5) angeschlossener Scharniere (19) schwenkbar an einer Karosserietraverse (18) angelenkt ist.

10. Festdach nach Anspruch 9, **dadurch gekennzeichnet, daß** die die Anlenkung der Heckfensterscheibe (3) abstützende Karosserietraverse (18) absenkbar gestaltet ist.

11. Festdach nach einem der Ansprüche 1 bis 10, **dadurch gekennzeichnet, daß** die in ihrer abgesenkten Verstaulage befindliche starre Dachhaube (2) mit ihrem vorderen Bereich die in der abgesenkten Stellung befindliche Heckfensterscheibe (3) übergreift.

## Claims

1. Retractable hard top for convertible vehicles with a boot lid (6), the roof consisting substantially of a rigid hood (2) spanning the entire passenger space (1) with a rear roof post (7) constructed integrally with the hood (2) and a rear window pane (3) which is adjustable independently thereof, the rear window pane (3) being movable to and fro between an erected position in which it is pivoted upwardly out of the vehicle body contour into a position lowered into the vehicle body and the hood (2) between a closed position covering the passenger space (1) and a backwardly shifted opening or stowage position, **characterised in that** the boot lid (6) is hinged to the vehicle body at or at least in the region of the B-pillar so as to embrace the back region of the hood (2) and **in that** the distance between the back of the rear roof post (7) of the hood (2) and the B-pillar of the vehicle body corresponds at least to the height of the hard top.

2. Hard top according to claim 1, **characterised in that** the rear window pane (3) can be folded independently of the hood (2) about an axis extending in the region of its lower edge (5) in a forwardly directed pivoting movement into the body.

3. Hard top according to claim 1 or 2, **characterised in that** the hood (2) and the boot lid (6) are pivotal in opposite directions to one another.

4. Hard top according to any of claims 1 to 3, **characterised in that** the roof hood (2) together with the rear roof post (7) constructed integrally therewith can be lowered by means of two pairs of pivot levers (8, 9), of which the body-side linkages (10, 11) are mutually spaced in the longitudinal direction of the vehicle, in a pivoting sliding movement into the boot (4) of the vehicle.

5. Hard top according to claim 4, **characterised in that** the front pivot levers (8) of the two pivot levers (8, 9) forming a pair of pivot levers are angled and form a central roof pillar in their angled upper region.

6. Hard top according to claim 4 or 5, **characterised in that** the front pivot levers (8) of the two pivot levers (8, 9) forming a pair of pivot levers are connected to one another over a stirrup-shaped region spanning the width of the body.

7. Hard top according to any of claims 1 to 6, **characterised in that** the rear side window regions (17) are constructed as triangular windows and are rigidly connected to the rear window pane (3).

8. Hard top according to claim 7, **characterised in that** the hood (2) and the rear window pane (3) combined with the side window regions (17) to form a unit are attached about mutually parallel axes to the vehicle body so as to pivot in identical directions.

9. Hard top according to any of claims 1 to 8, **characterised in that** the rear window pane (3) is hinged pivotally to a body cross-member (18) by means of simple hinges (19) which are attached to the lower edge (9) of the pane (3) in its central region.

10. Hard top according to claim 9, **characterised in that** the body cross-member (18) supporting the linkage of the rear window pane (3) is retractable in construction.

11. Hard top according to any of claims 1 to 10, **characterised in that** the rigid hood (2) located in its retracted stowage position spans, with its front region, the rear window pane (3) located in the lowered position.

## Revendications

1. Toit rigide escamotable pour voitures cabriolets ayant un couvercle de coffre (6), lequel est formé essentiellement d'un capot de toit rigide (2) couvrant l'ensemble de l'habitacle (1) avec des montants de toit arrière (7) unifiées par construction avec le capot de toit (2) et d'une vitre de fenêtre arrière (3) réglable indépendamment de celui-ci, la vitre de fenêtre arrière (3) étant déplaçable dans un sens et dans l'autre entre une position relevée où elle sort vers le haut du contour de la carrosserie du véhicule et une position abaissée à l'intérieur de la carrosserie du véhicule et le capot de toit (2) étant déplaçable dans un sens et dans l'autre entre une position de fermeture où il couvre l'habitacle (1) et une position d'ouverture ou de rangement où il est déplacé vers l'arrière, **caractérisé en ce que**
le couvercle de coffre (6) est articulé sur la carrosserie du véhicule sur, ou au moins dans, la zone de la colonne B en entourant la zone arrière du capot de toit (2), et
**en ce que** la distance entre la face arrière du montant de toit arrière (7) du capot de toit (2) et la colonne B de la carrosserie du véhicule correspond au moins à la hauteur du toit rigide.

2. Toit rigide selon la revendication 1, **caractérisé en ce que** la vitre de fenêtre arrière (3) est susceptible d'être rabattue à l'intérieur de la carrosserie indépendamment du capot de toit (2) par pivotement vers l'avant autour d'un axe s'étendant dans la partie de son bord inférieur (5).

3. Toit rigide selon la revendication 1 ou 2, **caractérisé en ce que** le capot de toit (2) et le couvercle de coffre (6) sont susceptibles de pivoter en sens inverse l'un par rapport à l'autre.

4. Toit rigide selon l'une des revendications 1 à 3, **caractérisé en ce que** le capot de toit (2) est susceptible d'être abaissé avec les montants de toit arrière (7) dans le coffre (4) du véhicule par un mouvement coulissant et pivotant au moyen de deux paires de leviers pivotants (8,9) dont les articulations (10,11) situées côté carrosserie sont espacées l'une de l'autre selon la direction longitudinale du véhicule.

5. Toit rigide selon la revendication 4, **caractérisé en ce que** les leviers pivotants avant (8) des deux leviers pivotants (8,9), formant une paire de leviers pivotants, sont coudés et forment dans leur partie supérieure coudée un montant de toit central.

6. Toit rigide selon la revendication 4 ou 5, **caractérisé en ce que** les leviers pivotants avant (8) des deux leviers pivotants (8,9), formant une paire de leviers pivotants, sont reliés entre eux par une partie en forme d'étrier couvrant la largeur de la carrosserie et forment un arceau de sécurité ou de capotage.

7. Toit rigide selon l'une des revendications 1 à 6, **caractérisé en ce que** des parties arrières de fenêtres latérales (17) sont réalisées sous forme de fenêtres triangulaires et sont reliées rigidement à la vitre de fenêtre arrière (3).

8. Toit rigide selon la revendication 7, **caractérisé en ce que** le capot de toit (2) et la vitre de fenêtre arrière (3) formant un ensemble avec les parties de fenêtres latérales (17), sont raccordés à la carrosserie du véhicule en pouvant pivoter autour d'axes parallèles entre eux et en pivotant dans le même sens.

9. Toit rigide selon l'une des revendications 1 à 8, **caractérisé en ce que** la vitre de fenêtre arrière (3) est articulée de façon pivotante sur une traverse de carrosserie (18) au moyen de charnières simples (19) dans sa partie centrale sur son bord inférieur (5).

10. Toit rigide selon la revendication 9, **caractérisé en ce que** la traverse de carrosserie (18) soutenant l'articulation de la vitre de fenêtre arrière (3) est conçue de façon à pouvoir être abaissée.

11. Toit rigide selon l'une des revendications 1 à 10, **caractérisé en ce qu'**il couvre, par sa partie avant, la vitre de fenêtre arrière (3) en position abaissée lorsque le capot de toit (2) est en position abaissée de rangement.
